# EUROPÄISCHE PATENTSCHRIFT

(11) **EP 0 494 400 B1**
(45) Veröffentlichungstag und Bekanntmachung des Hinweises auf die Patenterteilung: **02.08.1995**
(21) Anmeldenummer: 91121400.5
(22) Anmeldetag: 13.12.1991
(51) Int. Cl.: B23Q 3/12, B25D 17/08

(54) **Handwerkzeugmaschine mit abnehmbaren Werkzeughalter**
Hand-tool with removable tool-holder
Outil à main avec porte-outil détachable

(30) Priorität: 05.01.1991 DE 4100186
(43) Veröffentlichungstag der Anmeldung: 15.07.1992
(73) Patentinhaber: ROBERT BOSCH GMBH, 70442 Stuttgart (DE)
(72) Erfinder: Buck, Manfred, Dipl.-Ing., W-7440 Nürtingen (DE); Wanner, Karl, Dr.-Ing., W-7022 Leinfelden-Echterdingen (DE); Fehrle, Siegfried, W-7022 Leinfelden-Echterdingen 2 (DE); Kabatnik, Wilfried, Dipl.-Ing., W-7022 Leinfelden-Echterdingen 1 (DE)

(56) Entgegenhaltungen:
- EP-A- 0 265 378
- DE-A- 3 421 811
- DE-A- 3 526 162
- FR-A- 2 349 413

## Beschreibung

Die Erfindung geht aus von einer Handwerkzeugmaschine nach dem Oberbegriff des Anspruchs 1. Aus der EP-B-0 265 378 ist bereits ein Handgerät bekannt, dessen Werkzeughalter mittels Verriegelungskugeln und einem drehbaren Stützring gehalten wird. Bei diesem Gerät besteht die Gefahr, daß die Verriegelungselemente beim Wechseln des Werkzeughalters verloren gehen, da sie in keinem der Teile formschlüssig gehalten sind. Der Werkzeughalter selbst ist offenbar als einfaches Bohrfutter augebildet, dessen Betätigungsorgane nicht beschrieben sind.

Ferner ist aus der FR-A-2 349 413 eine Handwerkzeugmaschine mit Werkzeughalter nach dem Oberbegriff des Anspruchs 1 bekannt, bei der ein in den Werkzeughalter eingesetztes Werkzeug durch axiale Verschiebung einer Griffhülse entriegelbar ist und der ebenfalls durch axiales Verschieben der Griffhülse von einer Drehantriebsspindel der Handwerkzeugmaschine abnehmbar ist. Nachteilig an dieser Lösung ist, daß vor dem Abnehmen des Werkzeughalters ein Sicherungsring entfernt werden muß, was umständlich ist, oder daß beim Entriegeln des Werkzeughalters gleichzeitig ein in den Werkzeughalter eingesetztes Werkzeug entriegelt wird, wodurch das Werkzeug aus dem Werkzeughalter ungewollt herausfallen kann.

### Vorteile der Erfindung

Die erfindungsgemäße Handwerkzeugmaschine mit den kennzeichnenden Merkmalen des Anspruchs 1 hat demgegenüber den Vorteil, daß sich sowohl Werkzeuge als auch der Werkzeughalter in bedienungsfreundlicher Weise leicht wechseln lassen. Beides wird mit ein und demselben Betätigungselement bewerkstelligt, mit dem sich sowohl der Werkzeughalter von der Spindel lösen als auch ein Werkzeug entriegeln läßt. Dazu dient eine Griffhülse, die sowohl drehbar als auch axial verschieblich ist.

Durch die in den abhängigen Ansprüchen aufgeführen Maßnahmen sind vorteilhafte Weiterbildungen und Verbesserungen der im Anspruch 1 angegebenen Maschine möglich. Besonders vorteilhaft ist es, zwischen der Griffhülse und dem Grundkörper des Werkzeughalters die Drehfeder anzuordnen, die die Griffhülse in ihre jeweils verriegelnden Stellungen drängt. Die Drehfeder übt sowohl in Drehrichtung um ihre Achse als auch axial in Richtung ihrer Drehachse eine Kraft aus. Die Feder hat also den Vorteil, daß mit einem einzigen Bauelement sowohl die Verriegelung des Werkzeughalters als auch des Werkzeugs gesichert werden kann. Der Erleichterung bei der Montage des Werkzeughalters dient es, wenn das Spindelende offen auslaufende Längsnuten aufweist, in die ein Teil der Verriegelungskörper eingreift, bevor die geschlossenen Vertiefungen zur Verriegelung erreicht werden. Bei Eingriff mindestens eines Verriegelungskörpers in mindestens eine dieser Längsnuten ist der Werkzeughalter drehfest auf der Spindel fixiert, so daß durch Drehen an der Griffhülse der Ring in seine die Verriegelungskörper aufnehmende Drehstellung gedreht werden kann. Besonders vorteilhaft ist es auch, wenn die Verriegelungskörper in Durchbrüchen des Grundkörpers so gehalten sind, daß sich nicht herausfallen können.

### Zeichnung

Ein Ausführungsbeispiel der Erfindung ist in der Zeichnung dargestellt und in der nachfolgenden Beschreibung näher erläutert. Figur 1 zeigt einen Schnitt durch den vorderen Teil eines Bohrhammers. Figur 2 zeigt als Einzelteil die Spindel und Figur 3 den Grundkörper eines Werkzeughalters. Figur 4 zeigt einen Ring und Figur 5 eine Feder.

### Beschreibung des Ausführungsbeispiels

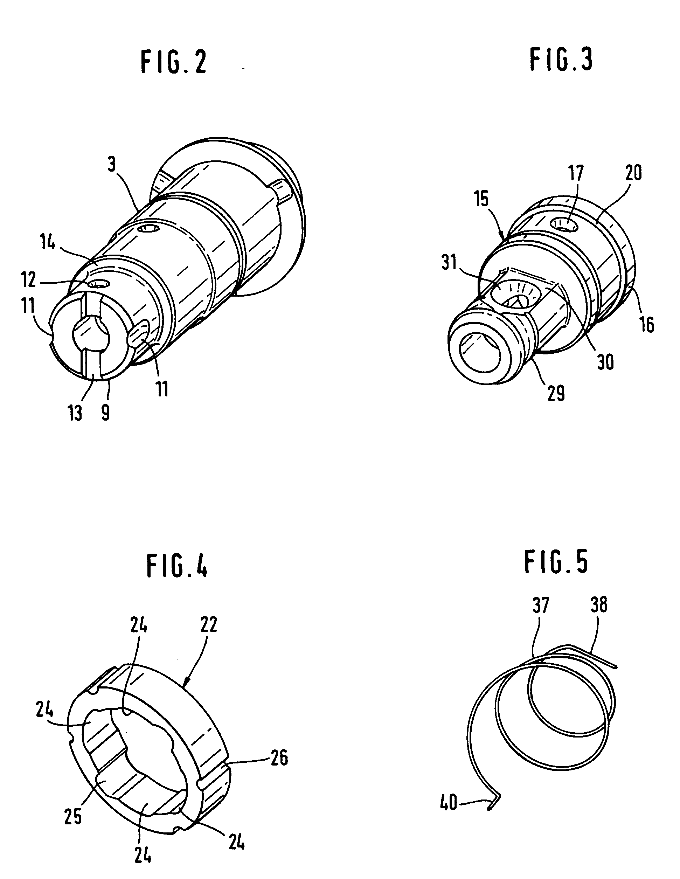

Ein Bohrhammer weist ein Gehäuse 2 auf, in dem eine von einem nicht gezeigten Motor angetriebene Hohlspindel beziehungsweise Hammerrohr 3 gelagert ist. Innerhalb der Spindel 3 ist ein Schlagwerk 4 mit Schläger 5 und Döpper 6 untergebracht, das axiale Schläge auf ein Werkzeug 7 ausübt. Das vordere, werkzeugseitige Ende 9 der Spindel 3 ist zylindrisch ausgeführt und bildet am Außenumfang eine Passung zum Aufstecken eines Werkzeughalters 10. Das Spindelende 9 weist zwei zu seiner Stirnfläche hin offene Längsnuten 11 und vorzugsweise um 90° Grad dazu versetzt zwei rundum abgeschlossene kegelstumpfförmige Vertiefungen 12 auf (vergleiche Figur 2). An ihrer Stirnseite hat die Spindel 3 eine Formnut 13. Das Spindelende 9 wird abgeschlossen von einem Bund 14, an dem in montiertem Zustand des Werkzeughalters 10 dessen Grundkörper 15 anliegt.

Der Grundkörper 15 hat die Form einer abgesetzten Hülse (vergleiche Figur 3). Ein Teil 16 mit dem größeren Innendurchmesser bildet eine Passung zum Ende 9 der Spindel 3. Der Teil 16 weist vier den Längsnuten 11 und den Vertiefungen 12 zugeordnete Durchbrüche 17 zur Aufnahme von Verriegelungskörpern 18 auf, die sich nach innen zur Spindel 3 hin verengen. Zwei gegenüberliegende Durchbrüche 17 sind dem maschinenseitigen Ende des Grundkörpers 15 näher als die anderen beiden. Damit wird bei der Montage erreicht, daß die darin befindlichen Verriegelungskörper 18 zunächst in die offenen Längsnuten 11 eingreifen. Innerhalb des Teils 16 hat der Grundkörper 15 Nocken 19, die in die Formnut 13 formschlüssig eingreifen, um ein Drehmoment auf den Werkzeughalter 10 zu übertragen. Der Teil 16 hat am Außenumfang einen Absatz 20. An diesem und an einem Sprengring 21 ist axial ein Ring 22 gehalten, der die Verriegelungskörper 18 überdeckt. Der Ring 22 ist um die Mittelachse 23 des Werkzeughalters 10 drehbar. Der Ring 22 hat an seiner Innenseite rotationssymmetrisch verteilt vier Ausnehmungen 24, von denen zwei in einem Teilbereich vertiefte Taschen 25 aufweisen (vergleiche Figur 4). An seinem Außenumfang hat der Ring 22 Längskerben 26, die der drehfesten Verbindung mit einer Griffhülse 27 dienen. Diese liegt mit ihrem vorderen Ende an einer Staubkappe 28 an, die auf den Grundkörper 15 des Werkzeughalters 10 gestülpt ist.

Ein vorderer Teil 29 des Grundkörpers 15 bildet eine Aufnahmebohrung, in der das Werkzeug 7 gehalten und verriegelt ist. Zu diesem Zweck weist der Teil 29 einseitig eine Abflachung 30 und darin eine Öffnung 31 auf, in der eine Verriegelungskugel 32 liegt, die in eine geschlossene Nut 33 des Werkzeugs 7 eingreift. Die Verriegelungskugel 32 wird von einem in der Griffhülse 27 angeordneten axial in Grenzen verschieblichen Haltering 34 in ihrer verriegelnden Stellung gehalten. Neben dem Haltering 34 ist ein Halteblech 35 angeordnet, das ebenfalls in Grenzen axial verschieblich ist. Es liegt an der Abflachung 30 an, um von der Verriegelungskugel 32 erfaßt werden zu können.

Die Griffhülse 27 ist aus Kunststoff gefertigt und überdeckt den größten Teil des Grundkörpers 15. Sie ist gegenüber dem Grundkörper 15 drehbar und axial verschieblich.

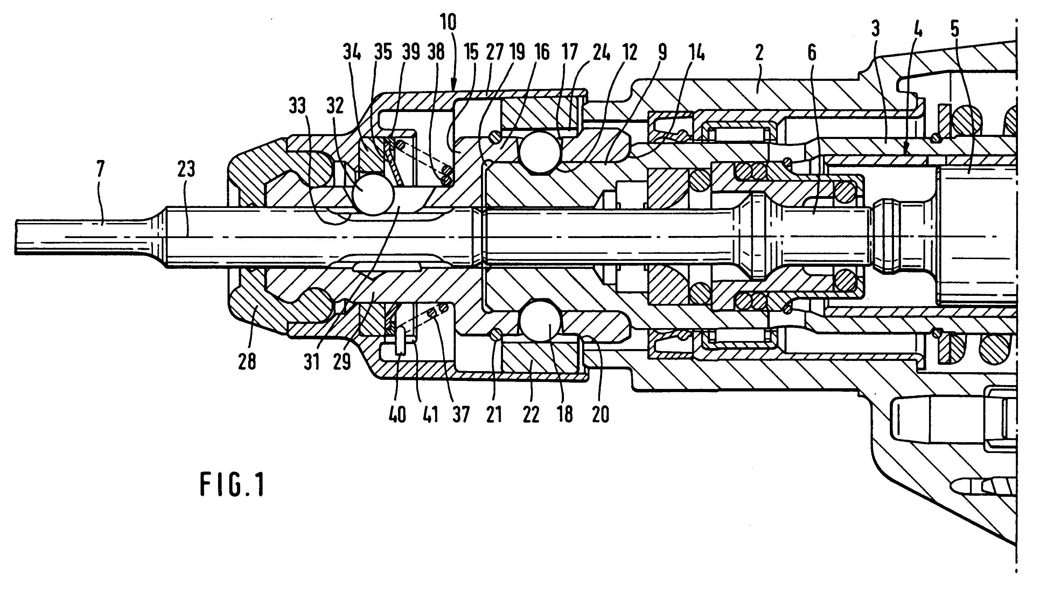

In Figur 1 ist die Griffhülse 27 in ihrer sowohl den Werkzeughalter 10 als auch das Werkzeug 7 jeweils verriegelnden Stellung gezeigt. Diese Stellung wird hervorgerufen durch eine Drehfeder 37 (siehe auch Figur 5). Sie stützt sich einerseits gegen den Grundkörper 15 ab, das heißt, ihr gestrecktes Ende 38 liegt quasi formschlüssig an der Abflachung 30 an. Das Ende 38 könnte bei einer anderen nicht gezeigten Ausführung auch in ein im Grundkörper 15 ausgebildetes Sackloch eingreifen. Auf jeden Fall ist das Ende 38 drehfest mit dem Grundkörper 15 verbunden. Auf der anderen Seite ist die Drehfeder 37 gegen eine abgewinkelte Scheibe 39, die an der Griffhülse 27 oder an dem Haltering 34 anliegt, abgestützt. Die Scheibe 39 hat die Aufgabe beim Zurückschieben der Verriegelungskugel 32 die Druckkraft der Feder 37 auf das Halteblech 35 zu übertragen und andererseits eine möglichst reibungslose Drehbewegung der Teile 28, 34, 37 zu ermöglichen. Die Drehfeder 37 ragt mit ihrem zweiten, radial abstehenden Ende 40 in einen axialen Schlitz 41 an der Griffhülse 27. Die Drehfeder 37 ist als konische Spiralfeder ausgebildet. Sie wirkt sowohl als Dreh- als auch als Druckfeder.

Die Griffhülse 27 und die Drehfeder 37 haben eine doppelte Funktion und dienen sowohl der Ver- und Entriegelung des Werkzeugs 7 als auch der Ver- und Entriegelung des Werkzeughalters 10 gegenüber der Spindel 3. Zum Aufsetzen des Werkzeughalters 10 wird dieser an das Ende 9 der Spindel 3 angesetzt und solange gedreht, bis die beiden axial zum Ende hin versetzten Verriegelungskörper 18 in die Längsnuten 11 eingreifen. Damit ist der Grundkörper 15 drehfest mit der Spindel 3 verbunden. Durch weiteres Drehen an der Griffhülse 27 verdreht sich der Ring 22 soweit, daß die beiden anderen Verriegelungskörper 18 in die Taschen 25 des Rings 22 einfallen. Nun kann der Werkzeughalter 10 bis zum Anschlag an dem Bund 14 der Spindel 3 auf diese aufgeschoben werden. Beim Loslassen der Griffhülse 27 dreht sich diese mit dem Ring 22 aufgrund der Drehkraft der Feder 37 wieder zurück, bis die in Figur 1 gezeigte verriegelnde Stellung erreicht ist. Zum Abnehmen des Werkzeughalters 10 wird die Griffhülse verdreht, bis die Verriegelungskörper 18 in die Taschen 25 einfallen. Der Werkzeughalter 10 wird sodann axial von der Spindel abgezogen.

Um ein Werkzeug 7 in den Werkzeughalter 10 einzusetzen, wird dieses mit seinem Schaft in die Aufnahmebohrung eingeschoben. Dabei drängt das Schaftende die Verriegelungskugel 32 nach hinten gegen das Halteblech 35. Dieses weicht axial gegen die Kraft der Drehfeder 37 aus. Sobald die Verriegelungskugel 32 in die Nut 33 des Werkzeugs 7 eingefallen ist, drängt die Drehfeder 37 das Halteblech 35 wieder in seine in Figur 1 gezeigte Ausgangsstellung. Zum Entnehmen des Werkzeugs 7 wird die Griffhülse 27 axial in Richtung auf das Schlagwerk 4 gezogen. Dabei wird auch der die Verriegelungskugel 32 an einem radialem Ausweichen hindernde Haltering 34 von dieser weggezogen. Die Verriegelungskugel 32 kann dann in die radial weitere Griffhülse 27 ausweichen, so daß das Werkzeug 7 aus dem Werkzeughalter 10 herausgezogen werden kann.

Die Erfindung beschränkt sich nicht auf das gezeigte Ausführungsbeispiel. Insbesondere können auch mehr oder weniger als 4 Verriegelungskörper vorgesehen werden. Die Formnut 13 und die Nocken 19 sind entbehrlich, wenn das Drehmoment ausreichend über die dann vorzugsweise walzenförmigen Verriegelungskörper 32 übertragen wird. Zur Verminderung der Reibung zwischen der Griffhülse 27 und der Staubkappe 28 kann dazwischen eine Gleitschicht, ein Gleitfilm oder ein Gleitring eingefügt sein. Der Werkzeughalter 10 kann für anders geartete Werkzeugschäfte auch unterschiedlich ausgebildet sein. In Frage kommen zum Beispiel Bohrfutter oder Halter für Werkzeuge mit Keilwellen.

## Patentansprüche

1. Handwerkzeugmaschine, insbesondere zum Bohren, Schlagbohren oder Schrauben, mit einem Werkzeughalter (10), der auf eine drehend antreibbare Spindel (3) der Handwerkzeugmaschine aufsetzbar ist und auf dieser durch wenigstens ein Verriegelungselement (18) festlegbar ist, wobei das wenigstens eine Verriegelungselement (18) einerseits in die Spindel (3) und andererseits in einen Grundkörper (15) des Werkzeughalters (10) radial eingreifen kann und in dieser Verriegelungsstellung von einem Ring (22) gehalten wird, der Ausnehmungen (24) zum radialen Eintauchen des wenigstens einen Verriegelungselementes (18) in seine nicht verriegelnde Stellung aufweist und der mit einer Griffhülse (27) verbunden ist, die zum Entriegeln eines in den Werkzeughalter (10) eingesetzten Werkzeuges (7) axial verschiebbar ist, dadurch gekennzeichnet, daß der Ring (22) drehfest mit der Griffhülse (27) verbunden ist und der Ring (22) bzw. die Griffhülse (27) zur Ver- bzw. Entriegelung des Grundkörpers (15) drehbar ist, wobei der Ring (22) bzw. die Griffhülse (27) in Drehrichtung auf die Verriegelungsstellung des wenigstens einen Verriegelungselementes (18) zu mit einem Rückstellmoment einer Drehfeder (37) beaufschlagt ist.

2. Handwerkzeugmaschine nach Anspruch 1, dadurch gekennzeichnet, daß ein Ende (38) der Drehfeder (37) drehfest mit dem Grundkörper (15) des Werkzeughalters (10) und ein anderes Ende (40) drehfest mit der Griffhülse (27) verbunden ist.

3. Handwerkzeugmaschine nach Anspruch 2, dadurch gekennzeichnet, daß die Drehfeder (37) zusätlich als Druckfeder in axialer Richtung wirkt und die Griffhülse (27) in axialer Richtung auf ihre das Werkzeug (7) verriegelnde Stellung drängt.

4. Handwerkzeugmaschine nach Anspruch 3, dadurch gekennzeichnet, daß die Drehfeder (37) axial über eine mit der Griffhülse (27) mitdrehbare Scheibe (39) gegen ein Halteblech (35) des Werkzeughalters (10) gestützt ist.

5. Handwerkzeugmaschine nach einem der vorhergehenden Ansprüche, dadurch gekennzeichnet, daß die Drehfeder (37) kegelförmig ausgebildet ist.

6. Handwerkzeugmaschine nach Anspruch 1, dadurch gekennzeichnet, daß an einem werkzeugseitigen Ende (9) der Spindel (3) sowohl wenigstens eine axial offen auslaufende Längsnut (11), als auch wenigstens eine axial geschlossene Vertiefung (12) zum Eingriff je eines Verriegelungskörpers (18) vorgesehen ist.

7. Handwerkzeugmaschine nach Anspruch 1, dadurch gekennzeichnet, daß an einem werkzeugseitigen Ende (9) der Spindel (3) und an einer gegenüberliegenden Stelle in dem Grundkörper (15) eine Formnut (13) bzw. Nocken (19) zur Drehmitnahme ausgebildet sind.

## Claims

1. Hand-held power tool, particularly for drilling, percussion drilling or screwdriving, comprising a tool-holder (10) which can be mounted on a rotationally drivable spindle (3) of the hand-held power tool and can be secured thereon by at least one locking element (18), said at least one locking element (18) being in turn able to engage radially on the one hand in the spindle (3) and on the other hand in a main body (15) of the toolholder (10) and being held in this locking position by a ring (22) which has recesses (24) for the radial penetration of the at least one locking element (18) into its non-locking position, and which is joined to a handle sleeve (27) which is axially displaceable in order to unlock a tool (7) inserted into the toolholder (10), characterised in that the ring (22) is joined to the handle sleeve (27) for rotation therewith and the ring (22) and the handle sleeve (27) can be turned to lock or unlock the main body (15), the ring (22) and the handle sleeve (27) being loaded in the direction of rotation towards the locking position of the at least one locking element (18) by a restoring moment of a torsion spring (37).

2. Hand-held power tool according to Claim 1, characterised in that one end (38) of the torsion spring (37) is connected to the main body (15) of the toolholder (10) for rotation therewith and another end (40) is connected to the handle sleeve (27) for rotation therewith.

3. Hand-held power tool according to Claim 2, characterised in that the torsion spring (37) additionally acts as a compression spring in the axial direction and urges the handle sleeve (27) in the axial direction towards the position in which it locks the tool (7).

4. Hand-held power tool according to Claim 3, characterised in that the torsion spring (37) is supported axially against a holding plate (35) of the toolholder (10) by means of a disc (39) which is rotatable together with the handle sleeve (27).

5. Hand-held power tool according to one of the preceding claims, characterised in that the torsion spring (37) is conical in shape.

6. Hand-held power tool according to Claim 1, characterised in that at that end (9) that faces the tool of the spindle (3) at least one longitudinal groove (11) whose end is axially open as well as at least one axially closed depression (12) are provided for engagement of a locking body (18) in each case.

7. Hand-held power tool according to Claim 1, characterised in that for rotational driving a shaped groove (13) is formed at that end (9) of the spindle (3) that faces the tool and bosses (19) are formed at an opposite point in the main body (15).

## Revendications

1. Machine portative servant en particulier à percer, à percer avec percussion ou à visser, avec un porte-outil (10) qui peut être mis sur une broche (3) de la machine portative pouvant être entraînée en rotation, et qui peut être fixé sur celle-ci à l'aide d'au moins un élément de verrouillage (18), l'un au moins des éléments de verrouillage (18) pouvant venir en prise d'une part dans la broche (3) et d'autre part radialement dans un corps de base (15) du porte-outil (10) et être maintenu dans cette position de verrouillage par une bague (22), porte-outil qui présente des évidements (24) permettant d'enfoncer radialement l'un au moins des éléments de verrouillage (18) dans sa position non verrouillée, et qui est relié à une douille de manoeuvre (27) que l'on peut faire coulisser axialement pour déverrouiller un outil inséré dans le porte-outil (10), machine portative caractérisée en ce que la bague (22) est reliée de façon solidaire en rotation à la douille de manoeuvre (27) et la bague (22) ou la douille de manoeuvre (27) peut tourner pour verrouiller ou déverrouiller le corps de base (15), la bague (22) ou la douille de manoeuvre (27) pouvant être actionnées dans le sens de rotation pour la position de verrouillage d'au moins un élément de verrouillage (18), par un ressort de torsion (37) avec un couple de rappel.

2. Machine portative selon la revendication 1, caractérisée en ce qu'une extrémité (38) du ressort de torsion (37) est reliée de façon solidaire en rotation au corps de base (15) du porte-outil (10), et une autre extrémité (40) est reliée de façon solidaire en rotation à la douille de manoeuvre (27).

3. Machine portative selon la revendication 2, caractérisée en ce que le ressort de torsion (37) agit en plus comme ressort de compression dans le sens axial, et la douille de manoeuvre (27) appuie dans le sens axial correspondant à la position qui verrouille l'outil (7).

4. Machine portative selon la revendication 3, caractérisée en ce que le ressort de torsion (37) s'appuie axialement, par l'intermédiaire d'une rondelle (39) qui peut tourner en même temps que la douille de manoeuvre (27), contre une languette d'arrêt en tôle (35) du porte-outil (10).

5. Machine portative selon l'une des revendications précédentes, caractérisée en ce que le ressort de torsion (37) est constitué sous une forme conique.

6. Machine portative selon la revendication 1, caractérisée en ce que l'on prévoit à une extrémité (9) de la broche (3) située du côté de l'outil, aussi bien au moins une rainure longitudinale (11) qui s'étend axialement de façon ouverte, qu'au moins aussi un renfoncement fermé axialement (12) servant à venir en prise avec un corps de verrouillage (18).

7. Machine portative selon la revendication 1, caractérisée en ce que, sur une extrémité (9) de la broche (3) située du côté de l'outil et à un endroit situé en regard dans le corps de base (15), on constitue une rainure (13) ou un ergot (19) pour assurer l'entraînement en rotation de l'un par l'autre.
